Europäisches Patentamt

**European Patent Office**

**Office européen des brevets**

(19)

(11) Publication number: **0 003 424**
**B1**

(12) **EUROPEAN PATENT SPECIFICATION**

(45) Date of publication of patent specification: **27.01.82**

(51) Int. Cl.³: **C 05 B 1/04**

(21) Application number: **79300115.7**

(22) Date of filing: **23.01.79**

(54) **Phosphate fertilizers and process for preparing them.**

(30) Priority: **23.01.78 GB 255178**
**31.05.78 GB 2521478**

(43) Date of publication of application:
**08.08.79 Bulletin 79/16**

(45) Publication of the grant of the European patent:
**27.01.82 Bulletin 82/4**

(84) Designated Contracting States:
**BE DE FR GB NL**

(56) References cited:
**FR - A - 966 499**
**FR - A - 1 140 368**
**FR - A - 1 144 884**
**US - A - 3 264 086**
**US - A - 3 389 959**
**US - A - 3 868 243**

(73) Proprietor: **Albright & Wilson Limited**
**Albright & Wilson House Hagley Road West**
**Oldbury Warley West Midlands, B68 0NN (GB)**

(72) Inventor: **Williams, Thomas Alan**
**Jalna Braystones Road,**
**Beckermet Cumbria (GB)**
Inventor: **Astley, Vivian**
**Brookfield House Grey Southen,**
**Cockermouth Cumbria (GB)**

(74) Representative: **Wilson, Michael John et al,**
**c/o Albright & Wilson Limited 1 Knightsbridge**
**Green**
**London SW1X 7QD (GB)**

Courier Press, Leamington Spa, England.

## Phosphate fertilizers and process for preparing them

This invention relates to fertilizers, in particular phosphate fertilizers and to processes for making them.

Phosphate fertilizers may be made by reacting ground calcium phosphate rock with phosphoric acid to form a slurry which is then granulated and sold as partially acidulated phosphate rock for use as fertilizers. Alternatively, the fertilizer may be ground basic slag alone or fortified with calcium phosphate, but these products are dusty as they have a broad particle size distribution. The partially acidulated phosphate rock usually has a $P_2O_5$ content, of which at least 40% is water soluble, while the basic slag or fortified slag has a low total $P_2O_5$ content, e.g. about 10%.

In U.S. Patent US—A—2913330 is described the production of triple superphosphate by reaction of ground rock with phosphoric acid in two portions, the first being a small amount, generally 4—15% by weight, of that needed to make the triple superphosphate. The product from the addition of the first portion of acid is free flowing and apparently dry but still of fine particle size. In "Agronomy Journal", 1966 Vol. 58 pp. 621—5, Ashby et al described experiments in which fine particles of phosphate rock are treated with aqueous phosphoric acid in varying proportions relative to the amount needed to react with the rock to form triple superphopshate. The rock is mixed with phosphoric acid to form a thin paste which is subsequently dried. The phosphoric acid products were tested as fertilizers. The rock was finely powdered and a slurry was formed by the reaction of rock and acid. In US Patent US—A—3264086 is described the reaction of a phosphate material comprising alkaline earth (optionally with alkali metal) silico phosphates with phosphoric acid to form free flowing phosphate products capable of retaining up to 9% phosphoric acid. The initial phosphate material which is low in fluorine, may be made by calcining phosphate rock with an alkali or alkaline earth metal base and phosphoric acid. While the phosphate product has a 45—56% $P_2O_5$ content, and was substantially completely soluble in citric acid when an alkali metal base was used in the heating, Table II discloses some products with only 40—65% of the $P_2O_5$ soluble in citric acid. The latter were made with use of a magnesium base in the heating presumably giving insoluble magnesium silico phosphate. The reaction of the acid with particles of the material of less than 2 mm may be carried out in a pug mill with subsequent drying of the slurry produced or in a fluid bed reactor to give a dry granular product directly. The products are expensive because of the 2 stage process from the rock. The products made via heating with a magnesium base have a lower phosphate availability for fertilizer purposes than those via heating with alkali metal base.

We have now found a granular substantially dust free fertilizer with a high total $P_2O_5$ content, a large percentage of which is soluble in 2% citric acid, and a process for making this fertilizer without the need for the granulation of an initially formed slurry of rock and acid.

The present invention provides a granular acidified calcium phosphate fertilizer comprising calcium dihydrogen phosphate (usually with a Ca:H atom ratio of 0.75:1—1.5:1 e.g. 0.8:1—1.2:1) which also comprises unreacted calcium phosphate rock with at least 85% usually at least 90% of the fertilizer particles having a size of 0.5—4 mm and up to 15% e.g. up to 10% of particles having a size outside this range, (particularly less than 0.5 mm), with a total $P_2O_5$ content of 30—40%, 50—80% of the $P_2O_5$ being soluble in 2% aqueous citric acid solution and 30—55% of the $P_2O_5$ being water soluble. Percentages in this specification are by weight. In this specification, unless otherwise stated, a statement that the particle size is in a given range or with a given maximum or minimum size means that substantially all the particles, e.g. at least 90% and especially at least 95% have a size in that range or with that given maximum or minimum size.

The present invention also provides a process for preparing a granular acidified calcium phosphate fertilizer which process comprises treating particles of calcium phosphate rock, which are not more than 4 mm size and at least 40% e.g. 40—75% or at least 75%, of which are of 0.5—4 mm e.g. 0.5—3 mm, with aqueous phosphoric acid of at least 45% acid concentration (expressed by weight as $P_2O_5$) with a ratio of the weight of the particles to the weight of the acid (on a solids free basis) of 2.0:1 to 4:1 to prepare the granular fertilizer of the invention.

The fertilizer product of the invention differs from those of US—A—3264086 because of its content of unreacted rock, which is substantially absent in the product of the patent. This rock is available for use as a very slow acting source of phosphate in fertilizers, while the products of the said US patent are either quick acting and washed away by rain, or have a citric insoluble P content which is an alkaline earth silico phosphate, which is substantially unavailable for fertilizer purposes. The products of the US patent have a much higher total $P_2O_5$ content, at least that of triple superphosphate. The amount of acid used to react with the silico-phosphate of the US patent is more that that needed to make triple super, compared to the amount of acid used in the process of the invention to react with phosphate rock, which amount is very much less than the amount for triple super. In the process of the US patent, the reaction product of acid and phosphate material usually needs a subsequent drying step, unless a fluid bed is used, while in the process of the invention a granular product may be made directly without any subsequent drying and granulation step.

In the granular acidified fertilizer, the total $P_2O_5$ content is 30—40% such as 35—40%. 2% aqueous citric acid solution at 20°C dissolves 50—80% e.g. 50—70% of the $P_2O_5$ content e.g. 55—70% and especially 55—65%, while water at 20°C dissolves 30—55% e.g. 30—50% preferably 38—55% e.g. 40—50% especially 45—50% of the $P_2O_5$ content of the fertilizer.

The fertilizer is a mixture of calcium dihydrogen phosphate and unattacked rock, with usually a little dicalcium monohydrogen phosphate (e.g. less than 10%, such as 5—10% by weight). The content of unattacked rock can be obtained from the proportion of fertilizer insoluble in the citric acid. The fertilizer is normally substantially free of calcium sulphate e.g. contains less than 5% by weight calcium sulphate such as less than 2% or 1% e.g. 0.1%—1.0% by weight. The particle size of the granules is 0.5—4 mm, preferably 0.5—3.5 mm, particularly preferred being particle sizes in the range 0.5—2.5 mm with less than 20% e.g. less than 5% outside this range and especially above this range. When the fertilizer contains any particles of less than 0.5 mm, preferably less than 2% of the total weight of particles are below 0.2 mm.

The treatment of rock with acid is usually carried out by mechanical mixing without fluidization. While the reaction may be carried out batchwise or continuously with simple mixing of the rock and acid usually with agitation, it is preferable in both processes to have some recycle granular product in order to encourage uniform granulometry of the product. The weight percentage of recycled product in a continuous process is usually 10—80% e.g. 30—60%. such as 40—50%. The recycle product may be present as a heel from a previous reaction (either from a separate batch reaction or a portion of recycled product in a continuous process) to which the acid and rock are added, and/or the recycle product may be added to the rock or at the same time as the rock.

The phosphate rock to be treated may be from any source e.g. Morocco, Israel, Tunisia, Florida, S. Carolina, Tennessee, the Western States of the U.S.A., U.S.S.R., Pacific Islands. Preferably the rock is not a "soft" one (e.g. not Tunisian Gafsa rock) and has a citrate soluble content of $P_2O_5$ of at most 20% (e.g. at most 10%). Moroccan rock e.g. with a citrate soluble content of $P_2O_5$ of about 4% is preferred.

The calcium phosphate rock as usually obtained from the rock producers has a wide range of particle sizes and this range is extended when the rock is ground, when the rock is to be converted to phosphoric acid by the wet process. For the present process the rock, further ground, or otherwise, is screened to retain particles of 0.5—4 mm, and preferably 0.5—3 mm diameter. To obtain the particles of a given range, e.g. 0.5—3 mm, the particles are separated into three fractions, with particle sizes above (oversized particles), below and within the given range. With particles of 0.5—3 mm only, the weight ratio of rock to acid is usually 3.5:1 to 4:1. If too much acid is added a slurry is formed.

In a preferred process, the acid is mixed with particles of rock of 0.5—4 mm e.g. 0.5—3 mm (preferably 0.5—2 mm) and particles of rock of 0.1—0.5 mm, the weight proportions of the latter to the former being up to a ratio of 60:40 e.g. up to 25:75 e.g. 5:95 to 25:75 such as 8:92 to 20:80 or 15:85 to 25:75, or 15:85 to 60:40 such as 25:75 to 60:40 or 25:75 to 50:50.

The particles of 0.1—0.5 mm for use in this preferred process may be obtained from the oversized particles, in particular those above 3 mm. In this process, the particles of greater than 3 mm, which have been separated, are crushed to a particle size of less than 3 mm, e.g. to 0.1—3 mm usually with 60—95% of the crushed particles in 0.5—3 mm range and 5—40% of the crushed particles in the 0.1—0.5 mm range. The crushed particles are mixed with those of 0.5—3 mm and the mixture of particles treated with the phosphoric acid.

Even more preferred is a process in which particles of greater than 2 mm are separated. and crushed to a size of less than 3 mm, e.g. 0.1—3 mm with usually 60—95% of the crushed particles in the 0.5—3 mm region and 5—40% of the crushed particles in the 0.1—0.5 mm range. The crushed particles or just those with 0.1—0.5 mm particle size which have been separated from the rest are mixed with those of 0.5—2 mm and the mixture of particles treated with the phosphoric acid. The weight ratio of particles of rock of 0.1—0.5 mm to the particles of rock of 0.5—3 mm is usually 5:95 to 25:75 e.g. 8:92 to 20:80 or 15:85 to 25:75. Alternatively screened rock of particle size 0.5—2 mm and the product of size of 0.5—2 mm obtained by screening crushed oversized particles may be mixed with the fines of size 0.1—0.5 mm.

Instead of crushing some of the oversize rock particles to produce the medium size particles and the minority of fines of 0.1—0.5 mm, fine particles of the latter size may be obtained, e.g. as a fraction separated after the initial separation of particles of at least 0.5 mm.

By the preferred and more preferred processes it is possible to react the rock with phosphoric acid in a weight ratio of 2:1 to 4:1 e.g. 2.3:1 to 4:1 and preferably 2.3:1 to 3.5:1 such as 2.4:1 to 3:1; the weight ratio is the ratio of the weight of the rock to the weight of aqueous liquid phase on a solids free basis i.e. excluding any solids present but including the acid, water and any impurities dissolved therein. The lower the ratio of rock to acid the higher is the percentage of $P_2O_5$ in the product which is water soluble. The amount of acid added is that which is insufficient to form a slurry with the rock (and recycle of any). To obtain the dry granular product there are needed no separate or extra granulation techniques e.g. drying of a slurry, nor water or steam treatment of a fine powder of the fertilizer. The amount of acid to be mixed with the rock particles is usually 18—36% e.g. 25—35% such as 26—32% by weight of the amount needed to convert the rock into triple superphosphate.

The aqueous phosphoric acid which is mixed and reacted with the rock has an acid concentration of at least 45% (expressed as $P_2O_5$ on a solids free basis), e.g. 45—65%, preferably at least 48% such as 48—55%. The acid usually contains 0.1—5% e.g. 0.5—3% by weight of sulphuric acid (expressed as $H_2SO_4$). The aqueous acid may be a wet process acid made by reaction of rock and sulphuric acid, separation of gypsum and concentration of the aqueous acid obtained; alternatively, the rock and sulphuric acid may be reacted to form anhydrous calcium sulphate or hemihydrate, with separation of the calcium sulphate and concentration of the acid obtained if desired. The aqueous acid may have been purified to remove some of its impurities, but preferably the aqueous acid has so many impurities that it is a slurry containing up to 30% solids, e.g. 0.1—30% or 2—25% such as 15—25%; solids are usually phosphates of iron, aluminium and magnesium and may contain calcium sulphate. Such a slurry may be obtained by concentration of a wet process acid from a rock of high impurity content, such as Florida rock, or by concentration of an impurity laden acid left as raffinate after extraction as part of a purification process in which the majority of the $H_3PO_4$ and a minority of the impurities are extracted by an organic water immiscible solvent such as methyl isobutyl ketone; after the concentration the acid may be allowed to settle and the supernatant liquid is separated leaving the desired slurry. The mixing of the rock particles and acid is exothermic and causes reaction to form a granular product directly; the reaction temperature may be 0—100°C, e.g. 0—80°C such as 10—70°C e.g. 10—50°C or 40—70°C and the reaction time is usually from 1 sec to 1 hr e.g. 10 secs to 10 mins, often less than 1 minute. While the acid or slurry may be added in 1 portion, it is preferable, especially for large scale operations, to add the acid or slurry slowly over a period of time e.g. 1—10 minutes e.g. 3—10 minutes in order to keep the reaction mix substantially dry throughout the overall reaction; a subsequent reaction period of 10 minutes to 2 hours may also be beneficial.

Thus in a most preferred process the rock particles of 0.5—4 mm, without but preferably with the small sized particles of 0.1—0.5 mm in a weight ratio of up to 25:75 with respect to the larger rock particles, are mixed with a slurry of 2—25% impurity laden solids content of concentrated phosphoric acid of 45—65% concentration (expressed as $P_2O_5$ on a solids free basis) in a 4:1 to 2.3:1 ratio e.g. 3:1 to 2.4:1 weight ratio (expressing the weight of slurry on a solids free basis) to form a granular fertilizer, preferably with the mixing being carried out in the presence of recycled granulated fertilizer product with a weight percentage of recycled product to rock of 30—60% to form a granular acidified calcium fertilizer product.

Optionally there may be added in the reaction up to 10% by weight (based on the weight of the rock) of powdered triple superphosphate.

The granular fertilizer products of the invention may be used directly as fertilizers for spreading on grassland or forests especially on acid soils. The invention is illustrated in the following Examples:

### Example 1

Moroccan phosphate rock (51% Ca expressed as CaO) is screened to separate rock particles of at least 1 mm diameter; these particles are then rescreened into three fractions (a) those less than 0.5 mm, (b) those of 0.5—2 mm and (c) those greater then 2 mm. Fraction (c) is crushed and screened to separate a fraction (d) of particle size 0.5—3.0 mm from those of larger size and from those of smaller size, the latter of less than 0.5 mm being a fraction (e).

Into a mixer fitted with rotating stirrer and containing 2 kg of heel are fed each minute simultaneously (i) 85 g of a 20% w/w solids content slurry of 53% $P_2O_5$ phosphoric acid (containing 1.5% $H_2SO_4$) at room temperature obtained after concentrating an aqueous raffinate from a purification of wet process acid with methyl isobutyl ketone as described in British Patent Specification 1,436,113, allowing the concentrated acid to settle and separating off a supernatant liquid form the desired slurry, and (ii) a dry mix of 100 g of recycled granular fertilizer product, 100 g of rock particles fraction (b), 90 g of screened crushed rock fraction (d) and 30 g of crushed rock fines fraction (e). The mixing of (i) and (ii) causes reaction between them and formation of a granulated product and a rise in temperature. After about 45 secs, 400 g of granular fertilizer product is removed and the remainder is the heel for use in the subsequent reaction. The granular fertilizer product sampled after 50—60 minutes operations contains a total of 32.5% $P_2O_5$, 52% of which is soluble in 2% aqueous citric acid and 33% of which is soluble in water at 20°C. The particle size of the product was as follows: 0.1% was less than 0.15 mm, 0.4% in range 0.15—0.25 mm, 1.2% in range 0.25 to 0.425 mm, 7.4% in range 0.425 to 0.75 mm and 12.6% in range 0.7—1.0 mm, 29.3% in range 1.0—1.4 mm, 16.6% in range 1.4—1.7 mm, 16.6% in range 1.7—2.4 mm, 14.5% in range 2.4—3.4 mm and 1.1% above 3.4 mm; less than 3% was below 0.5 mm.

## Example 2

The process of Example 1 was repeated as a batch process without any recycled granular product or recycle with reaction of 7.1 kg. of rock of particle size 0.5—1.7 mm, 1 kg of crushed rock fines of particle size 0.1—0.5 mm, and 2.4 kg of a 2.5% w/w solids content slurry of 53% $P_2O_5$ phosphoric acid obtained by concentration of the raffinate as in Example 1. The reaction produced a granular product containing 36.3% total $P_2O_5$ 58% of which was soluble in 2% citric acid and 42% of which was water soluble. The particle size of the product was as follows, 22.1% below 1 mm, 38.0% in range 1.0—1.4 mm, 34.2% in range 1.4—1.7 mm, 5.6% in range 1.7—2.4 mm; less than 2% was below 0.5 mm. and 0.1% was above 2.4 mm.

## Example 3

The process of Example 2 was repeated with 720 g of rock of particle size 0.5—1.7 mm, 480 g of a screened rock fraction of size 0.5—3.0 mm (the same as fraction (d) in Example 1) and 135 g of crushed rock fines of size 0.1—0.5 mm (the same as fraction (e) in Example 1), and 665 g of a 20% solids slurry of 53% $P_2O_5$ phosphoric acid, obtained as in Example 1. The rock and acid were mixed to give a granular fertilizer product containing 36.9% total $P_2O_5$, of which 59% is soluble in 2% citric acid and 43% of which was soluble in water. The particle size of the product was as follows 16.7% below 1 mm, 27.9% in range 1.0—1.4 mm, 32.8% in range 1.4—1.7 mm, 19.0% in range 1.7—2.4 mm 2.7% in range 2.4—3.5 mm, and 0.3% in range 3.5—4 mm and 0.6% above 4 mm; less than 1% of the product was less than 0.5 mm.

## Example 4

The process of Example 2 was repeated with 400 g of screened rock particle size 0.5—1.7 mm, 400 g of a screened rock fraction of size 0.5—1.7 mm (obtained in the same manner as fraction (d) in Example 1) and 200 g of crushed rock fines of size 0.1—0.4 mm, 475 g of a slurry containing 400 g of 53% $P_2O_5$ phosphoric acid and 75 g of solids obtained as in Example 1. The slurry was added over 0.5 min to the rock and the mixture mixed for 5 mins to give a granular fertilizer of particle size 0.5—4 mm containing 38.1% total $P_2O_5$ of which 63% was soluble in 2% citric acid and 49.6% was soluble in water.

## Example 5

The process of Example 4 was repeated with 800 g of screened crushed rock fraction of size 0.5—1.4 mm (obtained as for fraction (d) in Example 1) and 200 g of crushed rock fines of size 0.1—0.5 mm and 475 g of the slurry as in Example 4. The slurry was added to the stirred rock over 4 mins and the mixture stirred for 10 mins. to give a granular fertilizer of particle size 0.5—4 mm containing 37.9% total $P_2O_5$, of which 63.5% was soluble in 2% citric acid and 47.5% was soluble in water.

## Example 6

Moroccan Phosphate rock (28.7% $P_2O_5$) was crushed to a particle size as follows: 26.4% less than 0.2 mm, 13.5% between 0.2 and 0.4 mm, 35.0% between 0.4 and 1.2 mm, 24.3% between 1.2 and 2.4 mm and 0.8% above 2.4 mm. The crushed rock particles (1 kg per minute) and wet process phosphoric acid (54.1% $P_2O_5$ 1.5% $SO_4$) (250 mls per minute), which was the product of concentrating the raffinate from a process for purifying wet process acid with methylisobutyl ketone as described in BP 1436113, were mixed continuously with thorough mixing. Initially the rock and acid are added to a heel of preformed fertilizer product (20 kg). The weight ratio of rock to acid was 2.44:1. The residence time in the mixer was about 37 min. The reaction temperature was 35—36°C. A sample of the fertilizer product contained 37.1% $P_2O_5$ of which 47.7% of the $P_2O_5$ was soluble in water at 20°C and 60.4% of which was soluble in 2% citric acid. The particle size of a sample of the product was 5.2% between 0.2—0.4 mm, 47.5% between 0.4 and 1.2 mm, 39.8% between 1.2 and 2.4 mm and 6.8% above 2.4 mm.

## Example 7

50 parts of Moroccan phosphate rock, as in Example 1, of particle size, 15% above 4 mm, 15% of 3—4 mm, 13% of 1.7—3 mm, 44% of 0.85—1.7 mm, 3% of 0.5—0.85 mm, 2% of 0.3—0.5 mm and 8% below 0.3 mm, and 50 parts of disc milled Moroccan phosphate rock, of particle size, 3% of 1.7—3 mm, 46% of 0.85—1.7 mm, 13% of 0.5—0.85 mm, 12% of 0.3—0.5 mm and 26% below 0.3 mm and 50 parts of a 20% by weight slurry of phosphoric acid as in Example 1 were added continuously per unit time to a thorough mixer initially containing recycle fertilizer product as heel and the mixing continued with a residence time of about 18 min. A sample of the fertilizer product obtained contained 36.85% $P_2O_5$, of which 40% was water soluble and 60.6% was soluble in citric acid. The particle size of a sample of the product was 12.5% of 3—4 mm, 34% of 1.7—3 mm, 47% of 0.85—1.7 mm, 4% of 0.5—0.85 mm, 1% of 0.3—0.5 mm and 1% less than 0.3 mm.

## Claims

1. A granular acidified calcium phosphate fertilizer comprising calcium dihydrogen phosphate characterised in that it comprises also unreacted calcium phosphate rock at least 85% of the particles of fertilizer have a size of 0.5—4 mm, the fertilizer has total $P_2O_5$ content of 30—40%, 50—80% of the $P_2O_5$ is soluble in 2% aqueous citric acid solution and 30—55% of the $P_2O_5$ is water soluble.

2. A fertilizer according to Claim 1 characterized in that the total $P_2O_5$ content is 35—40%, 55—70% of the $P_2O_5$ is soluble in aqueous citric acid, and 40—50% of the $P_2O_5$ is water soluble.

3. A fertilizer according to Claim 1 or 2 characterized in that at least 80% of the particles have a particle size of 0.5—2.5 mm and less than 20% above and below that size.

4. A process for preparing acidified calcium phosphate fertilizer, which process comprises treating particles of calcium phosphate with aqueous phosphoric acid, characterized in that particles of calcium phosphate rock, which are of not more than 4 mm size and at least 40% of which are of 0.5—4 mm size, are treated with aqueous phosphoric acid of at least 45% acid concentration (expressed by weight as $P_2O_5$) with a ratio of the weight of the particles to the weight of the acid (on a solids free basis) of 2.0:1 to 4:1 to prepare a granular acidified calcium phosphate fertilizer.

5. A process according to claim 4 characterized in that the particles of calcium phosphate rock are mechanically mixed with the acid without fluidization to obtain a granular fertilizer.

6. A process according to claim 4 or 5 characterized in that the weight ratio of particles to acid is 2.3—3:1.

7. A process according to Claim 5 characterized in that the acid contains 2—25% by weight of solids and has been obtained by concentrating a wet process phosphoric acid.

8. A process according to any one of Claims 4—7 characterized in that the acid is mixed with larger particles of rock of 0.5—4 mm size and smaller particles of rock of 0.1—0.5 mm size, the weight ratio of the small particles to the larger particles being 5:95 to 60:40.

9. A process according to Claim 8 characterized in that the acid is mixed with the smaller and larger particles in a weight ratio of 15:85 to 60:40.

## Revendications

1. Engrais granulaire au phosphate de calcium acidifié comprenant du dihydrogéno-phosphate de calcium, caractérisé en ce qu'il comprend aussi du phosphate de calcium naturel non converti, et en ce qu'au moins 85% des particules d'engrais ont une grosseur de 0,5 à 4 mm, que l'engrais a une teneur totale en $P_2O_5$ de 30 à 40%, que 50 à 80% du $P_2O_5$ sont solubles dans une solution aqueuse à 2% d'acide citrique et que 30 à 55% du $P_2O_5$ sont solubles dans l'eau.

2. Engrais selon la revendication 1, caractérisé en ce que la teneur totale en $P_2O_5$ est de 35 à 40%, que 55 à 70% du $P_2O_5$ solubles dans l'acide citrique aqueux et que 40 à 50% du $P_2O_5$ sont solubles dans l'eau.

3. Engrais selon l'une des revendications 1 ou 2, caractérisé en ce qu'au moins 80% des particules ont une grosseur de 0,5 à 2,5 mm et que moins de 20% sont supérieures et inférieures à cette grosseur.

4. Procédé de préparation d'engrais au phosphate de calcium acidifié, consistant à traiter des particules de phosphate de calcium par l'acide phosphorique aqueux, caractérisé en ce que l'on traite des particules de phosphate de calcium naturel, qui ne dépassent pas 4 mm de grosseur et dont au moins 40% ont une grosseur de 0,5 à 4 mm, par l'acide phosphorique aqueux à une concentration d'acide d'au moins 45% (exprimée en poids de $P_2O_5$), le rapport du poids des particules au poids de l'acide (sur une base exempte de solides) étant compris entre 2,0:1 et 4:1, pour préparer un engrais granulaire au phosphate de calcium acidifié.

5. Procédé selon la revendication 4, caractérisé en ce que l'on mélange mécaniquement les particules de phosphate de calcium naturel avec l'acide sans fluidisation pour obtenir un engrais granulaire.

6. Procédé selon l'une des revendications 4 ou 5, caractérisé en ce que le rapport en poids des particules à l'acide est compris entre 2,3:1 et 3:1.

7. Procédé selon la revendication 5, caractérisé en ce que l'acide contient 2 à 25% en poids de solides et qu'on l'a obtenu en concentrant un acide phosphorique de procédé humide.

8. Procédé selon l'une quelconque des revendications 4 à 7, caractérisé en ce que l'on mélange l'acide à des particules de roche relativement grosses ayant une grosseur de 0,5 à 4 mm et à des particules de roche relativement fines ayant une grosseur de 0,1 à 0,5 mm, le rapport en poids des particules fines aux particules plus grosses étant compris entre 5:95 et 60:40.

9. Procédé selon la revendication 8, caractérisé en ce que l'on mélange l'acide aux particules relativement fines et relativement grosses en un rapport en poids compris entre 15:85 et 60:40.

## Patentansprüche

1. Körniges, angesäuertes, Calciumphosphat enthaltendes Düngemittel, enthaltend Calciumdihydrogenphosphat, dadurch gekennzeichnet, daß es außerdem nicht reagiertes Calciumphosphat-Gestein enthält, daß wenigstens 85% der Düngemittelteilchen eine Größe von 0,5 bis 4 mm besitzen, daß das Düngemittel einen Gesamtgehalt von $P_2O_5$ von 30 bis 40% besitzt, wobei 50 bis 80% des $P_2O_5$ in 2% iger wäßriger Zitronensäurelösung und 30 bis 55% des $P_2O_5$ in Wasser löslich sind.

2. Düngemittel nach Anspruch 1, dadurch gekennzeichnet, daß der Gesamtgehalt von $P_2O_5$ 35 bis 40% beträgt, wobei 55 bis 70% des $P_2O_5$ in wäßriger Zitronensäure löslich ist und 40 bis 50% des $P_2O_5$ in Wasser löslich ist.

3. Düngemittel nach Anspruch 1 oder 2, dadurch gekennzeichnet, daß wenigstens 80% der Teilchen eine Teilchengröße von 0,5 bis 2,5 mm besitzen und weniger als 20% eine Teilchengröße unterhalb und oberhalb dieser Größe besitzen.

4. Verfahren zur Herstellung eines angesäuerten, Calciumphosphat enthaltenden Mittels, wobei Teilchen von Calciumphosphat mit wäßriger Phosphorsäure behandelt werden, dadurch gekennzeichnet, daß Teilchen von Calciumphosphatgestein, die eine Größe von nicht mehr als 4 mm besitzen und von denen wenigstens 40% eine Größe von 0.5 bis 4 mm aufweisen, mit wäßriger Phosphorsäure einer Säurekonzentration von wenigstens 45% (ausgedrückt als Gewicht $P_2O_5$) behandelt werden, wobei das Gewichtsverhältnis der Teilchen zum dem Gewicht der Säure (ohne Feststoffe errechnet), 2,0:1 bis 4:1 beträgt, so daß ein gekörntes, angesäuertes CalciumphosphatDüngemittel gebildet wird.

5. Verfahren nach Anspruch 4, dadurch gekennzeichnet, daß die Teilchen aus Calciumphosphatgestein mechanisch mit der Säure ohne Fließbettanwendung vermischt werden um ein körniges Düngemittel zu erzielen.

6. Verfahren nach Anspruch 4 oder 5, dadurch gekennzeichnet, daß das Gewichtsverhältnis der Teilchen zur Säure 2:3 bis 3:1 beträgt.

7. Verfahren nach Anspruch 5, dadurch gekennzeichnet, daß die Säure 2 bis 25 Gew.-% Feststoffe enthält und durch Konzentrieren einer Naßphosphorsäure erhalten worden ist.

8. Verfahren nach einem der Ansprüche 4 bis 7, dadurch gekennzeichnet, daß die Säure mit größeren Gesteinsteilchen von 0,5 bis 4 mm Größe une kleineren Gesteinsteilchen von 0,1 bis 0,5 mm Größe vermischt werden, wobei das Gewichtsverhältnis der kleinen Teilchen zu den größeren Teilchen 5:95 bis 60:40 beträgt.

9. Verfahren nach Anspruch 8, dadurch gekennzeichnet, daß die Säure mit den kleineren und größeren Teilchen in einem Gewichtsverhältnis von 15:85 bis 60:40 vermischt wird.